# EUROPEAN PATENT APPLICATION

(11) **EP 3 435 078 A2**
(43) Date of publication of application: **30.01.2019**
(21) Application number: 18181849.3
(22) Date of filing: 05.07.2018
(51) Int. Cl.: G01N 30/60

(54) **PACKED BED**

(30) Priority: 25.07.2017 US 201762536933 P
(71) Applicant: Optimize Technologies, Inc., Corbett, OR 97019 (US)
(72) Inventor: DeLine, Robert, Corbett, OR 97019 (US)
(74) Representative: Gevers Patents

(57) **Abstract**

A packed bed includes a housing and at least one packed bed component disposed within the housing. The housing includes a first integral end configured to axially retain packed bed components within the housing. The housing further includes a second integral end configured to axially receive packed bed components within the housing in a first, open position and axially retain the packed bed components within the housing in a second, closed position. In one embodiment, the second end is configured to axially receive packed bed components within the housing in a first, uncrimped position and axially retain the packed bed components within the housing in a second, crimped position.

## Description

### CROSS-REFERENCE TO RELATED APPLICATION

This application claims the benefit of U.S. Provisional Application No. 62/536933, filed July 25, 2017, the disclosure of which is incorporated herein by reference in its entirety.

### BACKGROUND

High performance liquid chromatography (or high pressure liquid chromatography, HPLC) and ultra high performance liquid chromatography (UHPLC) are both a form of column chromatography used frequently in biochemistry and analytical chemistry to separate, identify, and quantify compounds. HPLC and UHPLC utilize an HPLC column that holds chromatographic packing material (stationary phase), a pump that moves the mobile phase(s) through the HPLC column, and a detector that shows the retention times of the molecules. Retention time varies depending on the interactions between the stationary phase, the molecules being analyzed, and the solvent(s) used. In HPLC analysis, the sample is pumped through the HPLC column under an elevated pressure, typically at 300 to 6,000 psi, and in UHPLC, analysis, system pressure extends upward to 1400 bar or 20,000 psi or higher.

Liquid chromatography-mass spectrometry (LC/MS) is an analytical chemistry technique that combines the physical separation capabilities of liquid chromatography with the mass analysis capabilities of mass spectrometry. LC/MS is a powerful technique used for many applications which has very high sensitivity and specificity. Generally its application is oriented towards the specific detection and potential identification of chemicals in the presence of other chemicals (in a complex mixture).

All of the various components and lengths of tubing used in HPLC, UHPLC, and LC/MS analysis are typically interconnected by fitting assemblies, such as those described in U.S. Pat. Nos. 8,696,902; 5,525,303; 5,669,637; 5,730,943; 5,911,954; 6,000,916; and 6,095,572, the entire disclosures of which are incorporated by reference herein. For instance, the fitting assemblies may include first and second fitting subassemblies that receive an insert or packed bed therebetween to place the packed bed into fluid communication with the tubing. The packed bed may be a trap column, which is an internal packing material that uses the adsorptive properties of analytes to effectively concentrate dilute samples, desalt, remove detergents, etc., or another type of filter assembly or conduit.

The packed bed may include first and second opposing male fittings that are sealable within female cavities of the first and second fitting subassemblies. It is advantageous if the fitting assembly and the packed bed provide a true zero-dead-volume connection between the analytical components to minimize dead space in the flow path.

For instance, the internal components of the packed bed must be able to withstand the pressures of the HPLC, UHPLC, and LC/MS analyses while minimizing internal swept volume. To achieve this result, many packed beds involve complicated and/or expensive manufacturing or assembly techniques, such as using screw threads, welding, or brazing to capture the internal components of the packed bed, such as the packed beds shown and described in "Quarter Turn Connect Fitting," U.S. Patent No. 6,095,572, issued August 1, 2000; "Assembly for placing an insert into communication with an analytical chemical instrument," U.S. Patent No. 8,307,541, issued November 13, 2012; and "High Pressure Connect Fitting," U.S. Patent No. 8,696,902, issued April 15, 2014, the entire disclosures of which are incorporated by reference herein.

Accordingly, a simplified yet effective packed bed design is desired.

### SUMMARY

A packed bed includes a housing and at least one packed bed component disposed within the housing. The housing includes a first integral end configured to axially retain packed bed components within the housing. The housing further includes a second integral end configured to axially receive packed bed components within the housing in a first, open position and axially retain the packed bed components within the housing in a second, closed position.

In one embodiment, the second end is configured to axially receive packed bed components within the housing in a first, uncrimped position and axially retain the packed bed components within the housing in a second, crimped position

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

### DESCRIPTION OF THE DRAWINGS

The foregoing aspects and many of the attendant advantages of this invention will become more readily appreciated by reference to the following detailed description, when taken in conjunction with the accompanying drawings, wherein:
FIGURE 1 is an isometric view of a packed bed formed in accordance with an exemplary embodiment of the present disclosure;
FIGURE 2 is an exploded view of the packed bed of FIGURE 1, wherein an end portion of the packed bed is shown in a first, open position;
FIGURE 3 is a side view of the packed bed of FIGURE 1; and
FIGURE 4 is a cross-sectional view of the packed bed of FIGURE 3 taken substantially across line 4-4.

### DETAILED DESCRIPTION

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the disclosure to the precise forms disclosed. Similarly, any steps described herein may be interchangeable with other steps, or combinations of steps, in order to achieve the same or substantially similar result.

In the following description, numerous specific details are set forth in order to provide a thorough understanding of exemplary embodiments of the present disclosure. It will be apparent to one skilled in the art, however, that many embodiments of the present disclosure may be practiced without some or all of the specific details. In some instances, well-known structures or process steps have not been described in detail in order not to unnecessarily obscure various aspects of the present disclosure. Further, it will be appreciated that embodiments of the present disclosure may employ any combination of features described herein.

The present application includes references to directions, such as "forward," "rearward," "upward," "downward," "vertical," "horizontal," "open," "closed," etc. These references and other similar references in the present application are only to assist in helping describe and understand the present invention and are not intended to limit the present invention to these directions. Also, references to "packed bed," "insert," "column," "trap column," "filter assembly," or similar are understood to be interchangeable and are not meant to be limiting in nature.

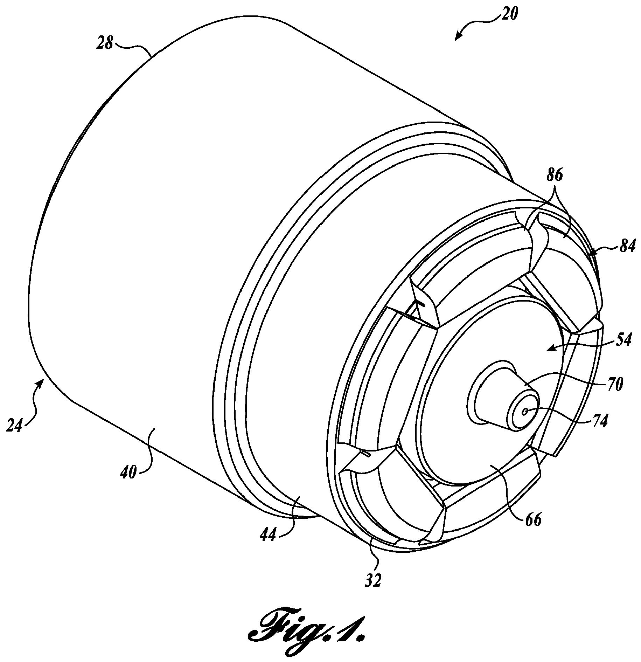

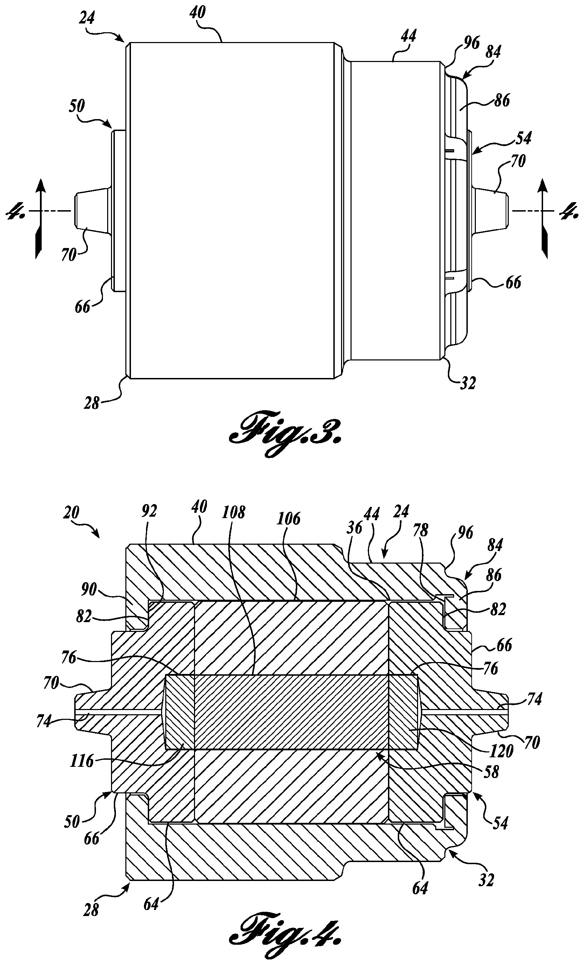

Referring to FIGURES 1-4, a packed bed 20 formed in accordance with an exemplary embodiment of the present disclosure is provided. The packed bed 20 is generally configured to be used in a fitting assembly, such as one of the fitting assemblies described in U.S. Pat. Nos. 8,696,902; 5,525,303; 5,669,637; 5,730,943; 5,911,954; 6,000,916; and 6,095,572 noted above. For instance, the fitting assemblies may include first and second fitting subassemblies that receive the packed bed 20 therebetween to place the assembly 20 into fluid communication with equipment tubing.

The packed bed 20 will now be described in detail. The packed bed 20 includes a generally cylindrical housing 24 with a first integral housing end 28, a second integral housing end 32, and an interior bore 36 extending therethrough. A first cylindrical body portion 40 extends axially from the first housing end 28 and has a first outer diameter. A second cylindrical body portion 44 extends axially from the first cylindrical body portion 40 toward the second housing end 32 and has a second outer diameter smaller than the first outer diameter to correspond to a similarly-shaped interior of a fitting assembly. However, in alternate embodiments, the first and second cylindrical body portions 40 and 44 may have the same outer diameter, or the second cylindrical body portion 44 may be larger in diameter than the first cylindrical body portion 40.

The cylindrical housing 24, as defined by the first housing end 28, the second housing end 32, and the interior bore 36, is configured to receive and capture sealing, flow regulating, and/or filtering components or other suitable UHPLC, HPLC, or LC/MS components. For instance, the packed bed 20 may include packing material configured to absorb certain substances, one or more frits containing packing material, frits used without packing material, a simple flow-through conduit, a pressure transducer or other flow restrictor (for changing the flow rate, dividing the flow, etc.), or other components.

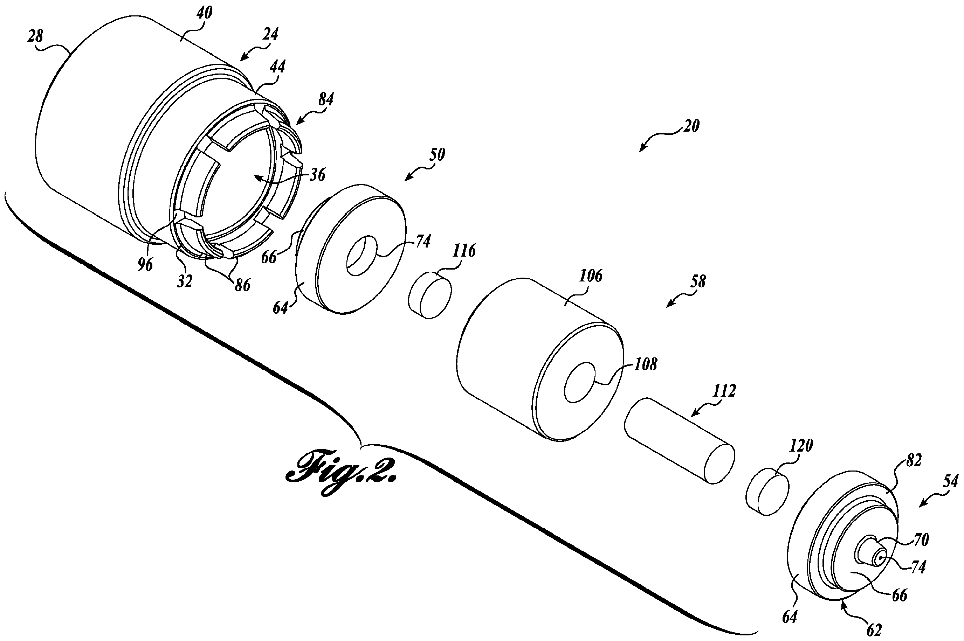

In the depicted embodiment, the packed bed 20 includes a first male fitting or seal 50 sealing disposed within the first housing end 28 of the cylindrical housing 24, a second male fitting or seal 54 sealing disposed within the second housing end 32 of the cylindrical housing 24, and a packing material assembly 58 sealing disposed therebetween. The first and second male seals 50 and 54 are identical in configuration and operation; and therefore, only the second male fitting 54 (which is more clearly shown in FIGURE 2) will be described in detail. In that regard, identical features are labeled with identical reference numerals for both the first and second male seals 50 and 54.

The second male fitting 54 includes a body 62 defined by a first cylindrical portion 64 having a first outer diameter and a second cylindrical portion 66 having a second outer diameter smaller than the first outer diameter, and an exterior annular shoulder 82 defined between the first and second cylindrical portions 64 and 66. The second male fitting 54 further includes an integrally formed tip 70 extending from the second cylindrical portion 66 and a central axial passageway 74 extending axially along the length of the second male fitting 54 between the tip 70 and an internal central recess 76 opposite the tip 70. The second male fitting 54 is preferably manufactured from a polymer, such as polyetheretherketone ("PEEK") or another material suitable for sealing against the interior of the cylindrical housing 24.

In that regard, the body 62 of the second male fitting 54 is sized and configured to be sealingly received within the second housing end 32 of the cylindrical housing 24. Any suitable interface may be defined between the second male fitting 54 and the interior of the second housing end 32 of the cylindrical housing 24. In the depicted embodiment, a second internal annular shoulder 78 is defined inside the second housing end 32 of the cylindrical housing 24 for abutting against the exterior annular shoulder 82 of the second male fitting 54. Likewise, a first internal annular shoulder 92 is defined at the first housing end 28 of the cylindrical housing 24 for abutting the exterior annular shoulder (not labeled) of the first male fitting 50.

The first internal annular shoulder 92 is defined by an annular transverse end portion 90 that extends radially into the interior bore 36 a predetermined radial length that is substantially the same radial length of the exterior annular shoulder 82 of the first male fitting 50. In this manner, the first internal annular shoulder 92 captures and retains the first male fitting 50 within the cylindrical housing 24. The second cylindrical portion 66 of the first male seal 50 is preferably of a sufficient axial depth such that it protrudes at least slightly from the first housing end 28 of the cylindrical housing 24 for mating/sealing with a fitting assembly.

The second housing end 32 of the cylindrical housing 24 is defined by a cap portion 84 having crimpable fingers 86 extending axially from an exterior transverse end 96 of the second housing end 32. The crimpable fingers 86 are moveable from an initial, open, uncrimped position, as shown in FIGURE 2, to a second, closed, crimped position, as shown in FIGURES 1, 3, and 4. In the uncrimped position, the crimpable fingers 86 collectively define a generally cylindrical shape extending from the exterior transverse end 96 of the second housing end 32.

In the crimped position, the crimpable fingers 86 define the second internal annular shoulder 78 at the second housing end 32 of the cylindrical housing 24. The exterior annular shoulder 82 of the second male fitting 54 abuts against the second internal annular shoulder 78 after the fingers 86 are crimped, thereby capturing the internal components within the cylindrical housing 24. Moreover, the second cylindrical portion 66 of the second male seal 54 is preferably of a sufficient axial depth such that it protrudes at least slightly from the cap portion 84 for mating/sealing with a fitting assembly.

When the crimpable fingers 86 are in the uncrimped position, the second housing end 32 is not yet defined. Rather, the second housing end 32 is initially an open end that is configured to allow all the internal components of the packed bed 20 to be inserted into the cylindrical housing 24. When inserted through the uncrimped, open end, the components abut against the first internal annular shoulder 92 of the first housing end 28 to prevent the components from moving axially out of the cylindrical housing 24. The crimpable fingers 86 are moved from the uncrimped position (FIGURE 2) to the crimped position (FIGURES 1, 3, and 4) either manually (such as with a tool or press) or through an automated process. In the crimped position, the crimpable fingers 86 define the cap portion 84 that axially retains the internal components within the cylindrical housing 24.

It should be appreciated that the first and second housing ends 28 and 32, and specifically the interface between the first and second internal annular shoulders 92 and 78 and the correspondingly shaped first and second male seals 50 and 54, may instead be any other suitable shape or configuration. The crimpable cap portion 84, regardless of precise configuration, is suitable to sealingly capture and retain the internal components of the packed bed 20 once inserted within the cylindrical housing 24.

Additional internal components may be disposed between the first and second male seals 50 and 54 for carrying out one or more functions of the packed bed 20. In the depicted embodiment, a packing material assembly 58 is disposed axially between the first and second male seals 50 and 54. The packing material assembly 58 includes a packing material housing 106 that is substantially cylindrical in shape and diametrically sized to fit within the central bore 36 of the cylindrical housing 24. The packing material housing 106 includes a central bore 108 that contains a packing material (or separating media) 112.

The packing material 112 may be a particulate packing material, through which particles greater than a predetermined size are prevented from passing. Alternately, the packing material may be a chemical packing material, such as a selectively absorbent or adsorbent packing material that filters out substances having specific chemical properties. In yet another embodiment, the packing material may comprise magnetic beads. It should be appreciated that any packing material now known or later developed suitable for selectively filtering or otherwise processing fluids passing therethrough can be included without departing from the scope of the disclosure.

First and second frits or porous plugs 116 and 120 are coaxially located on each end of the packing material 112 and are received within the internal central recess 76 of each of the first and second male seals 50 and 54. The porous plugs 116 and 120 are formed from a material that selectively allows certain materials to pass through the plug, while restricting the passage of other materials.

During use, a fluid to be filtered is introduced into the central axial passageway 74 of the first male fitting 50 and passes through the first porous plus 116, the packing material 112, and the second porous plug 120, thereafter exiting the central axial passageway 74 of the second male fitting 54. As the fluid passes through the packing material 112, undesired elements are absorbed. The flow may of course go in the reverse direction.

The packed bed 20 is seated between first and second fitting subassemblies of an HPLC, UHPLC, or LC/MS fitting assembly (not shown) for placing the packed bed 20 into fluid communication with the equipment tubing. More specifically, the first and second male seals 50 and 54 engage correspondingly shaped recesses of the first and second fitting subassemblies. As the male seals 50 and 54 are axially expanded within the fitting subassembly recesses (due to the high pressure of the fluid), the tip 70 and the second cylindrical portion 66 of the male seals 50 and 54 both engage the walls of the fitting subassembly recess to form primary and second seals respectively, and also deform and occupy space otherwise associated with dead volume in the fitting (e.g., the volume of space between the very end of the male seal tip 70 and the recess of the fitting subassembly). With the male seals 50 and 54 made from PEEK or another suitable material, the male seals 50 and 54 energize during the high pressure fluid flow to form a high pressure seal between the male seals 50 and 54 and the first and second fitting subassemblies.

At the same time, the swept volume within the packed bed 20 is minimized. In other words, the axial compression of the internal filtering components (e.g., the male seals and the packing assembly) minimizes any voids between the internal components. The axial compression results when the crimpable fingers 86 at the second housing end 32 are moved into a crimped position, exerting an axial force on the male seals 50 and 54 (and therefore also the packing assembly 58) in opposition to the axial force exerted by the annular transverse end portion 90 at the first housing end 28. The resulting packed bed 20 is capable of withstanding extremely high pressures (e.g., 30,000 PSI). Without the crimped cap portion 84 securely capturing the softer male seals 50 and 54, the packed bed would fail at significantly lower pressures. For example, PEEK has an unsupported mechanical yield strength of around 13,000 PSI, but by fully capturing the seals with the crimped cap, the packed bed 20 can be used in a range up to 30,000 PSI or higher.

Moreover, the packed bed 20 provides all of the above described benefits while being simple and easy to manufacture. The cylindrical housing 24 for containing the packed bed components includes a single integral piece that can enclose and retain the internal packed bed components by a simple crimping process. The packed bed 20 avoids the expensive manufacturing process required with threads (for securing a cap portion onto the housing), welding, etc.

While illustrative embodiments have been illustrated and described, it will be appreciated that various changes can be made therein without departing from the spirit and scope of the invention.

## Claims

1. A packed bed, comprising:
a housing, comprising:
a first integral end configured to axially retain packed bed components within the housing;
a second integral end configured to axially receive packed bed components within the housing in a first, open position and axially retain the packed bed components within the housing in a second, closed position;
at least one packed bed component disposed within the housing.

2. The packed bed of Claim 1, wherein the second end is defined by a plurality of crimpable axial fingers extending from the housing that are moveable from the first, open position to the second, closed position.

3. The packed bed of Claim 1, wherein the crimpable axial fingers define an internal annular shoulder in the second, closed position that is configured to engage and axially retain one of the at least one packed bed components.

4. The packed bed of Claim 1, wherein the crimpable axial fingers define a capped portion in the second, closed position that is configured to engage one of the at least one packed bed components.

5. The packed bed of Claim 1, wherein the first integral end of the housing is defined by a substantially transverse annular portion that is configured to engage one of the at least one packed bed components.

6. The packed bed of Claim 1, wherein the at least one packed bed component includes a first male seal at least partially protruding from the first integral end of the housing and a second male seal at least partially protruding from the second integral end of the housing.

7. The packed bed of Claim 6, wherein the at least one packed bed component further includes a packing assembly axially disposed between the first and second male seals.

8. The packed bed of Claim 6, wherein the housing is comprised of metal and the first and second male seals are comprised of a polymer.

9. A packed bed, comprising:
a housing, comprising:
a first end configured to axially retain packed bed components within the housing;
a second end configured to axially receive packed bed components within the housing in a first, uncrimped position and axially retain the packed bed components within the housing in a second, crimped position;
at least one packed bed component disposed within the housing.

10. The packed bed of Claim 9, wherein the second end is defined by a plurality of crimpable axial fingers extending from the housing that are moveable from the first, uncrimped position to the second, crimped position.

11. The packed bed of Claim 9, wherein the crimpable axial fingers define an internal annular shoulder in the second, crimped position that is configured to engage one of the at least one packed bed components.

12. The packed bed of Claim 9, wherein the crimpable axial fingers define a capped portion in the second, crimped position that is configured to engage one of the at least one packed bed components.

13. The packed bed of Claim 9, wherein the first end of the housing is defined by a substantially transverse annular portion that is configured to engage one of the at least one packed bed components.

14. The packed bed of Claim 9, wherein the at least one packed bed component includes a first male seal at least partially protruding from the first end of the housing and a second male seal at least partially protruding from the second end of the housing.

15. The packed bed of Claim 14, wherein the at least one packed bed component further includes a packing assembly axially disposed between the first and second male seals.

16. The packed bed of Claim 14, wherein the housing is comprised of metal and the first and second male seals are comprised of a polymer.
